# EUROPEAN PATENT SPECIFICATION

(11) **EP 4 193 139 B1**
(45) Date of publication and mention of the grant of the patent: **02.12.2026**
(21) Application number: 21853106.9
(22) Date of filing: 23.02.2021
(51) Int. Cl.: G01N 21/77, G01N 21/78, G01N 21/03

(54) **TESTING DEVICE WITH BUILT-IN LIQUID STORAGE**
PRÜFVORRICHTUNG MIT EINGEBAUTEM FLÜSSIGKEITSSPEICHER
DISPOSITIF DE TEST AVEC STOCKAGE DE LIQUIDE INTÉGRÉ

(30) Priority: 05.08.2020 HK 32020013261
(43) Date of publication of application: 14.06.2023
(73) Proprietor: Ausmed Global Ltd, Wanchai, Hong Kong (HK)
(72) Inventor: CHAU, Li Yin, City One Shatin, N.T. (HK); YIP, Lam Christine, Redhill Peninsula, Tai Tam (HK)
(74) Representative: Murgitroyd & Company
(86) International application number: PCT/IB2021/051493
(87) International publication number: WO 2022/029508

(56) References cited:
- EP-A2- 0 608 006
- WO-A1-2010/055308
- WO-A2-2018/101788
- CN-A- 102 590 197
- CN-A- 106 053 446
- CN-A- 108 514 514
- CN-A- 109 557 086
- CN-U- 209 690 181
- CN-Y- 2 470 820
- IT-A1- MI20 082 296
- US-A- 4 074 944
- US-A- 4 790 453
- US-A1- 2008 038 738
- US-A1- 2008 311 663
- US-A1- 2012 167 672
- US-A1- 2014 276 100
- US-A1- 2014 370 086
- US-A1- 2016 041 134
- US-A1- 2016 245 793
- US-A1- 2017 151 260
- US-B1- 6 319 235
- US-B2- 8 828 741

## Description

### Technical Field

The present invention relates generally to a testing device with built-in liquid storage and, in particular, to a testing device for analyte measurements.

### Background

In testing devices for analyte measurements, test papers (e.g. paper strips impregnated with a reagent) have long been used in analytical chemistry for the detection and measurement of inorganic ions, organic substances and biologics in liquids and gases. These test papers should be kept dry for storage and then wetted for use with a liquid, such as water, a buffer solution, or a reagent solution, for example.

It is important that the test papers are not saturated with the liquid during the test as the impregnated liquid (e.g. the reagent solution) on the test paper becomes too diluted for accurate measurements to be obtained. That is, it is important for a correct amount of liquid to be applied to the test papers in these testing devices.

US2014/276100 Al describes a system for sensing an analyte in breath of a patient, the system comprising: a cartridge comprising a first container, a fluid container, and a reaction volume in fluid communication with the first container and the fluid container, the first container containing a first interactant and the fluid container containing a fluid, wherein the fluid container has an initial fluid level and a space above the initial fluid level; and a base comprising a flow path for flow of the breath within the base, a breath input receiver in fluid communication with the flow path that receives the breath and directs the breath into the flow path, a cartridge housing that detachably receives the cartridge into the base so that the reaction volume is in fluid communication with the flow path, a dispensing device that creates a hole in the fluid container below the initial fluid level and that moderates pressure in the space above the initial fluid level as the fluid moves out of the liquid container so that the fluid moves out of the liquid container and into the reaction volume, thereby facilitating an optical change in the reaction volume in relation to at least one of a presence and a concentration of the analyte; and an optical subsystem that senses the optical change and generates an output comprising information about the analyte in response to the optical change

### Summary

It is an object of the present invention to substantially overcome, or at least ameliorate, one or more disadvantages of existing arrangements.

Disclosed are arrangements which seek to address the above problems by providing a testing device that has an improved design for storing liquid, discharging liquid from a liquid capsule and collecting excess liquid.

According to a first aspect of the present disclosure, there is provided a testing device for analyte measurements, the testing device comprising a body and a liquid releasing mechanism, the body comprising a reaction chamber and a capsule receiving aperture for receiving a liquid capsule containing a liquid, wherein the reaction chamber and capsule receiving aperture are in fluid communication with each other; the body further comprising at least one gas inlet and at least one gas outlet, wherein the gas inlet is arranged to receive a gas under test; wherein the at least one gas inlet and the at least one gas outlet are connected to the reaction chamber to allow gas to flow in and out of the reaction chamber wherein the reaction chamber is arranged to receive, during a test of the gas under test, a first transparent plate and a second transparent plate with a test paper positioned between the first transparent plate and the second transparent plate; wherein the liquid releasing mechanism is arranged to release the liquid in the liquid capsule into the reaction chamber during the test; wherein the body further comprises: at least one liquid store in communication with the reaction chamber, wherein the liquid store is arranged to receive excess liquid from the liquid in the liquid capsule during the test; wherein the liquid releasing mechanism comprises a hinged element that is hingedly connected to the body , and a protrusion positioned on the hinged element that is arranged to enter the capsule receiving aperture when the hinged element is hingedly moved relative to the body to engage with the liquid capsule and squeeze out the liquid into the reaction chamber.

### Brief Description of the Drawings

At least one embodiment of the present invention will now be described with reference to the drawings and appendices, in which:
Fig. 1 shows a schematic diagram of a testing device as described herein when being used according to the present disclosure;
Fig. 2 shows a testing device with a liquid capsule and a test paper according to an embodiment of the present disclosure;
Fig. 3 shows a testing device with a liquid capsule inserted with the top open according to an embodiment of the present disclosure;
Fig. 4 shows a testing device with a liquid capsule inserted with the top closed according to an embodiment of the present disclosure;
Fig. 5 shows a liquid capsule being squeezed according to an embodiment of the present disclosure;
Fig. 6 shows flow of liquid in a testing device according to an embodiment of the present disclosure;
Fig. 7 shows a testing device when in use according to an embodiment of the present disclosure;
Figs. 8A to 8I show cross-sectional images of a testing device according to an embodiment of the present disclosure;
Fig. 9 shows a testing device with a liquid capsule and a test paper according to an embodiment of the present disclosure;
Fig. 10 shows a testing device with a liquid capsule inserted according to an embodiment of the present disclosure;
Fig. 11 shows a testing device in use according to an embodiment of the present disclosure;
Fig. 12 shows a cross section of a liquid capsule engaging a testing device according to an embodiment of the present disclosure;
Figs. 13A to 13C show a piercing element penetrating a seal in a liquid capsule according to an embodiment of the present disclosure;
Fig. 14 shows the flow of liquid in a testing device according to an embodiment of the present disclosure;
Fig. 15 shows the flow of gas in a testing device according to an embodiment of the present disclosure;
Fig. 16 shows cross-sectional images of a testing device according to an embodiment of the present disclosure;

### Detailed Description including Best Mode

Where reference is made in any one or more of the accompanying drawings to steps and/or features, which have the same reference numerals, those steps and/or features have for the purposes of this description the same function(s) or operation(s), unless the contrary intention appears.

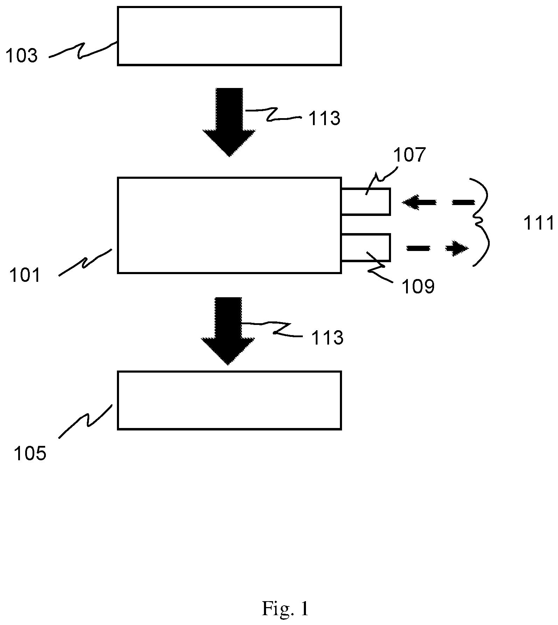

Fig. 1 shows a schematic diagram of a testing device 101 with a light source 103 and a photo sensor 105. The testing device 101 has a gas inlet 107 and a gas outlet 109. The gas path is shown by arrows 111. The light path is shown by arrows 113.

The light source 103 may be an LED (light emitting device) or any other suitable light source. The light source may be a monochromatic light source. The light source may be a full spectrum light source.

The photosensor 105 senses both colour and light intensity.

The testing device is for analyte measurement and has built-in liquid discharge, storage and collection mechanisms for use with test papers (e.g. reagent test papers). The testing device allows gas in and out to enable chemical reactions between the gas and the test paper located inside a reaction chamber of the testing device. The test paper is placed on top of a transparent plate or sheet and both this transparent plate or sheet and the test paper are placed at the bottom of a reaction chamber of the testing device. Another transparent plate or sheet is placed above the test paper at the top of the reaction chamber. Liquid, such as water for example, from a liquid capsule is passed over the test paper in the reaction chamber. The liquid in the capsule may also be a buffer solution or a reagent solution, for example. The testing device enables gas to be drawn into the reaction chamber via an external pump, for example, and allows externally generated light to pass through the reaction chamber of the testing device. As an alternative the external pump may not be used, and the gas may be provided to the reaction chamber by alternative means, such as by a user breathing into an input tube.

In this example, the transparent plates or sheets are made from PMMA (Poly(methyl methacrylate)). The PMMA sheet has an advantage of high transparency, low price, easy mechanical processing, etc., which can reduce the production cost of the testing device. As an alternative, the transparent plates (or sheets) may be made from organic glass.

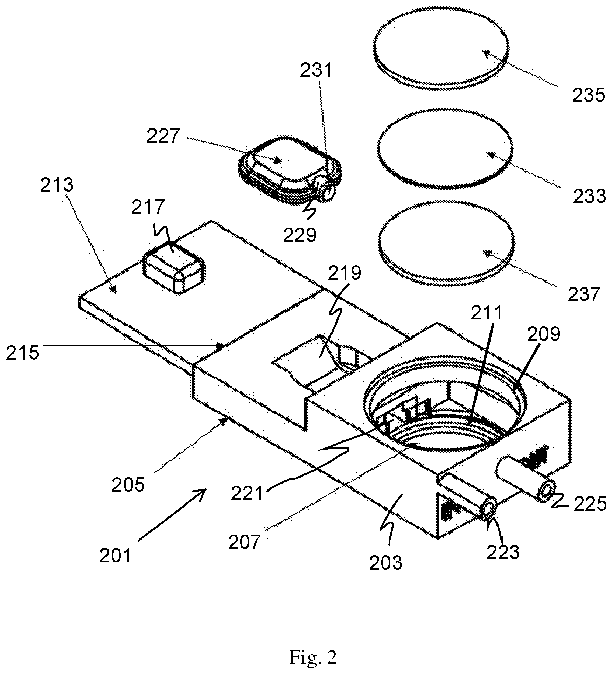

Fig. 2 shows a testing device 201 with a liquid capsule 227 and a test paper 233.

According to an embodiment, the testing device 201 has a body 203 with a base 205. Formed in the body 203 is a reaction chamber 207. An upper surface 209 of the reaction chamber 207 is arranged to detachably connect to an upper transparent plate 235. A lower surface 211 of the reaction chamber 207 is arranged to detachably connect to a lower transparent plate 237.

The testing device has a hinged element 213 in the form of a top or lid. The hinged element 213 is hingedly connected to the body 203 by a hinge 215. In this example, the body 203 and hinged element 213 may be formed as a unitary piece where the connecting material between the body 203 and the hinged element 213 is thin and flexible enough to act as a hinge 215 and to enable the body 203 and hinged element 213 to hingedly move relative to each other.

As an alternative, it will be understood that a separate hinge may be used that is connected to both the body and the hinged element.

On the hinged element 213 is a protrusion 217. The protrusion 217 is arranged on the hinged element at a position so that the protrusion locates into a capsule receiving aperture 219 upon the body 203 and hinged element 213 moving relative to each other, i.e. when the hinged element 213 is rotated over and onto the base 205. The hinged element 213 and protrusion 217 form a liquid releasing mechanism for releasing liquid from the liquid capsule 227 into the reaction chamber 207.

The capsule receiving aperture 219 is arranged to receive the liquid capsule 227 and has a corresponding shape of the liquid capsule 227. In between the reaction chamber 207 and the capsule receiving aperture is a capsule fluid channel 221 that allows liquid to be transferred from the liquid capsule 227 to the reaction chamber 207.

In this embodiment, the hinged element 213, body 203 and base 205 are made from plastic.

Located on the side of the body 203 of the testing device 201 are a gas inlet 223 and a gas outlet 225. An inlet pipe (not shown) and an outlet pipe (not shown) may be connected to the gas inlet and gas outlet.

In this embodiment, the test paper 233 and two transparent PMMA sheets are circular or disk like in shape to correspond with the shape of the upper and lower surfaces (209, 211) and the upper and lower openings of the reaction chamber 207. However, it will be understood that alternative shapes may be used, such as, for example, rectangular and elliptical shapes.

Also, in this embodiment, the liquid capsule 227 is a compressible liquid capsule and is arranged to store liquid therein. Upon the liquid capsule 227 being compressed or squeezed by the protrusion 217, the liquid inside of the liquid capsule 227 comes out and enters the reaction chamber 207 via the capsule fluid channel 221. In this embodiment, the liquid capsule 227 is made of Polyethylene (PE) and has a nozzle 229 covered by a seal 231 to prevent liquid leaking from the liquid capsule until a test is initiated. In this example, the seal 231 is a flexible metal-plastic laminate. The liquid capsule 227, test paper 233 and two transparent plates or sheets (235, 237) are assembled into the reaction chamber 207 in the body 203 of the testing device 201.

The liquid capsule 227 in this example is made of polyethylene (PE), which has good chemical stability. It is insoluble in general solvents at room temperature, and has low water absorption, excellent electrical insulation. The material does not react with the liquid stored therein. It will be understood that alternative materials may be used for the liquid capsule, such as, for example, polypropylene (PP), polytetrafluoroethylene (PTFE), polybutylene terephthalate (PBT), polyamide (PA) and polyvinyl chloride (PVC).

It will be understood that alternative materials may be used for the seal, such as, for example, metal (e.g. flexible metal), silicon, rubber and a plastic film.

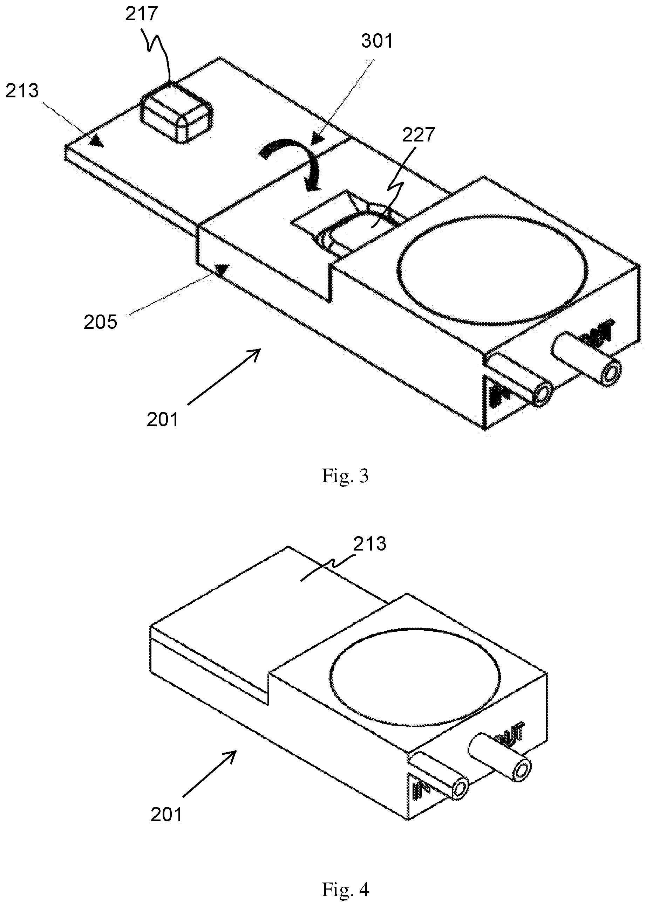

Fig. 3 shows a testing device 201 with a liquid capsule 227 inserted into the capsule receiving aperture 219. The hinged element 213 (e.g. the top or lid) is shown in an open position. An arrow 301 indicates the movement (e.g. rotation) of the hinged element 213 to move the protrusion 217 to a position where the protrusion 217 engages with the liquid capsule 227 and squeezes or compresses the liquid capsule 227 in the capsule receiving aperture 219 to cause the liquid inside the liquid capsule 227 to be released.

Fig. 4 shows a testing device 201 with a liquid capsule (not shown) inserted with the hinged element 213 (e.g. the top or lid) in a closed position.

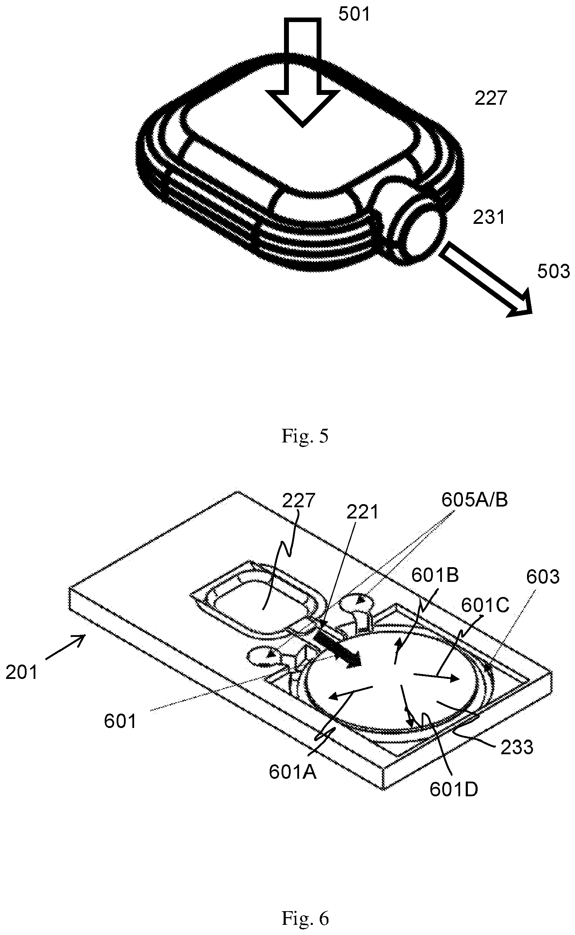

Fig. 5 shows a liquid capsule 227 being squeezed or compressed by a force indicated by arrow 501, which would be applied when the protrusion 217 engages with the liquid capsule 227 as the hinged element 213 is moved relative to the body 203 (and base 205) of the testing device 201. The squeezing or compressing of the liquid capsule 227 causes the pressure of the liquid stored therein to increase and subsequently break the seal 231 of the liquid capsule 227. After the seal 231 is broken, the liquid is emitted from the liquid capsule 227 as shown by the liquid flow arrow 503.

Fig. 6 shows an example of the flow of the liquid from the liquid capsule 227 in a testing device 201 that is shown in cross-section. The test paper 233 is shown on top of the lower transparent plate (not shown), which is resting on the lower surface (not shown) of the reaction chamber 207. The liquid in the liquid capsule 227 flows from the liquid capsule 227 via the capsule fluid channel 221 into the reaction chamber 207 and over the surface of the test paper 233 as indicated by the flow arrows 601A-D. Around the edge of the reaction chamber 207 is a liquid channel 603. In this example, the liquid channel 603 is a ring cavity that is arranged circumferentially around the edge of the reaction chamber 207, and so around the edge of the test paper 233 when the testing device 201 is in use. When in use, the liquid channel 603 is below the upper surface of the test paper 233 to allow the excess liquid to pass over the edge of the test paper 233 and enter the liquid channel 603.

The liquid channel 603 is fluidly connected to two liquid chambers 605A and 605B. The liquid chambers (605A, 605B) are located either side of the capsule fluid channel 221.

It will be understood that, as an alternative, there may be one or more liquid chambers that are fluidly connected to one or more liquid channels. It will also be understood that the configuration and positioning of the liquid channel(s) and/or liquid chamber(s) may be changed.

The liquid discharge and collection mechanism described can prevent or reduce the risk of diluting the liquid (e.g. a reagent solution) in the test paper 233 by enabling the excess liquid to enter and be stored in the two liquid chambers (605A, 605B) via the liquid channel 603.

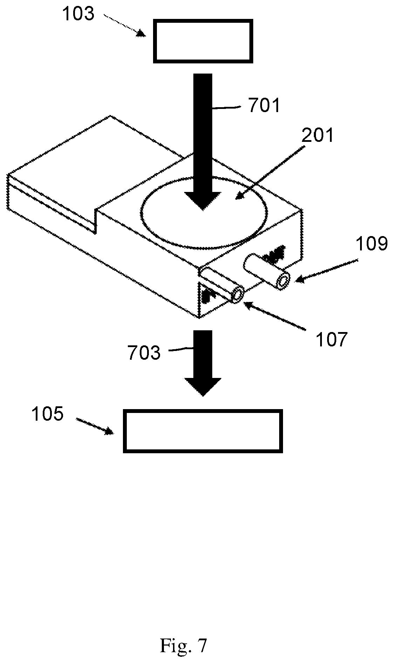

Fig. 7 shows a testing device 201 when in use. The light source 103 emits light 701 into the reaction chamber of the testing device 201. Light passes through the reaction chamber and light (703) is emitted out of the other side of the reaction chamber. The light 701 passes through the upper plate 235, test paper 233 (which has been wetted by the liquid from the liquid capsule) and the lower plate 237 and is emitted onto the photo sensor 105 for detection purposes.

An external pump (not shown) pumps the gas under test (GUT) into the reaction chamber 207 through the gas inlet 107 via a gas inlet pipe (not shown). The GUT exits the testing device 201 through the gas outlet 109 and a gas outlet pipe (not shown).

In summary, the testing device stores the liquid with the liquid capsule inside the test device. It makes the storage of the liquid simple and convenient. When the liquid capsule is squeezed or compressed by the protrusion on the hinged element, the liquid is discharged. The excess liquid is collected by the liquid storage chambers so that the excess liquid does not affect the test result of the test paper.

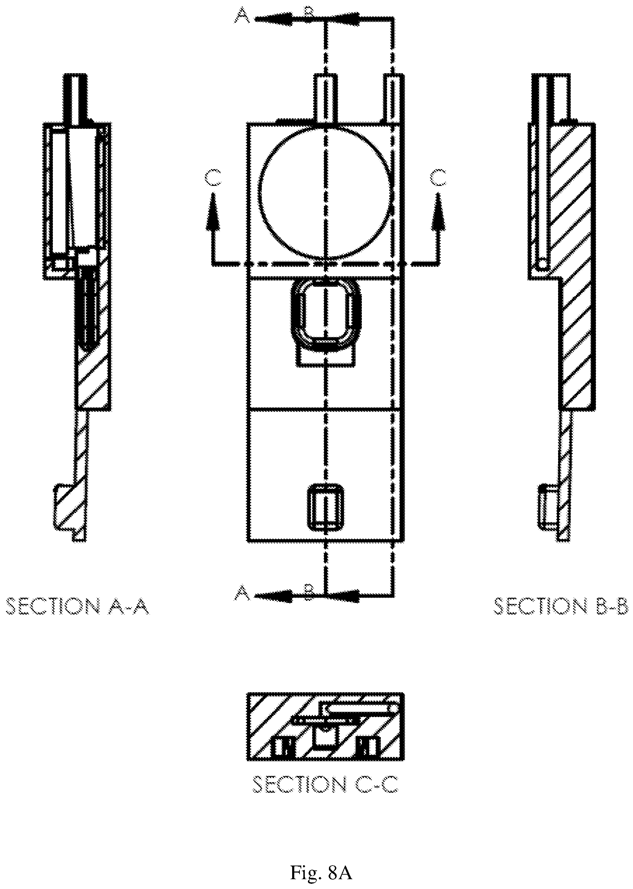

Figs. 8A to 8I show cross-sectional images of a testing device.

Fig. 8A shows a cross sectional image of a testing device indicating sections A-A, B-B and C-C.

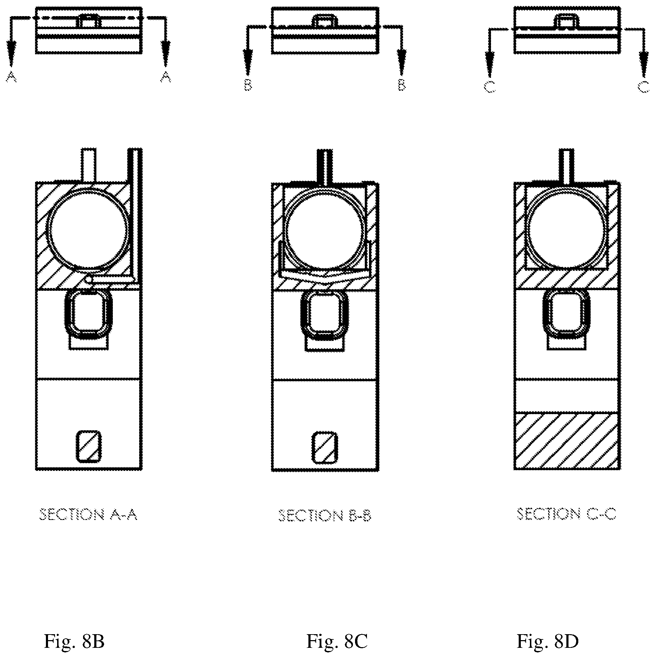

Fig. 8B shows a cross sectional image of a testing device with a second section A-A.

Fig. 8C shows a cross sectional image of a testing device with a second section B-B.

Fig. 8D shows a cross sectional image of a testing device with a second section C-C.

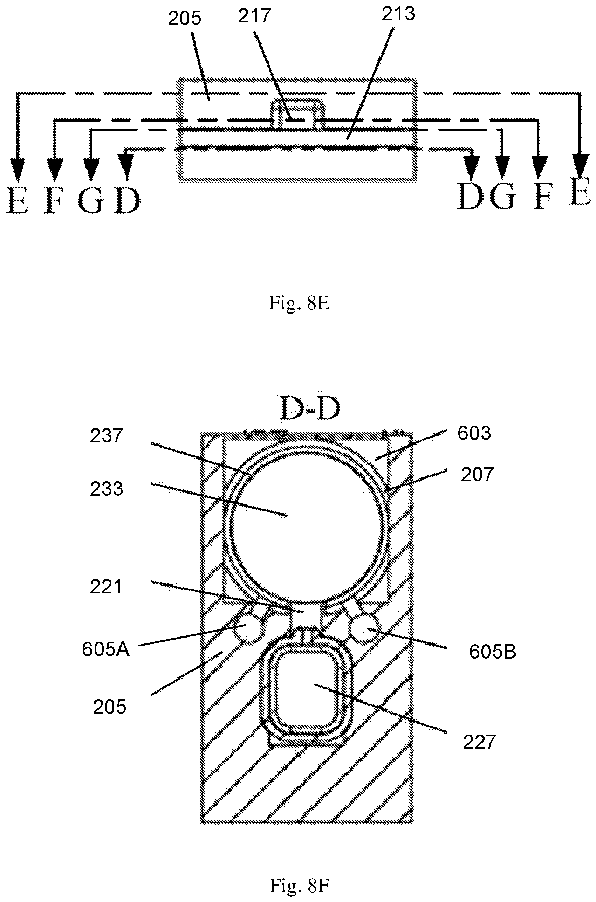

Fig. 8E shows a cross sectional image of a testing device indicating sections D-D, E-E, F-F and G-G. Shown are the base 205, hinged element 213 and protrusion 217.

Fig. 8F shows a cross sectional image of a testing device across section D-D. Shown in Fig. 8F are the lower plate 237, the test paper 233, the capsule fluid channel 221, the base 205, the liquid channel 603, the reaction chamber 207, the liquid chambers (605A, 605B) and the liquid capsule 227.

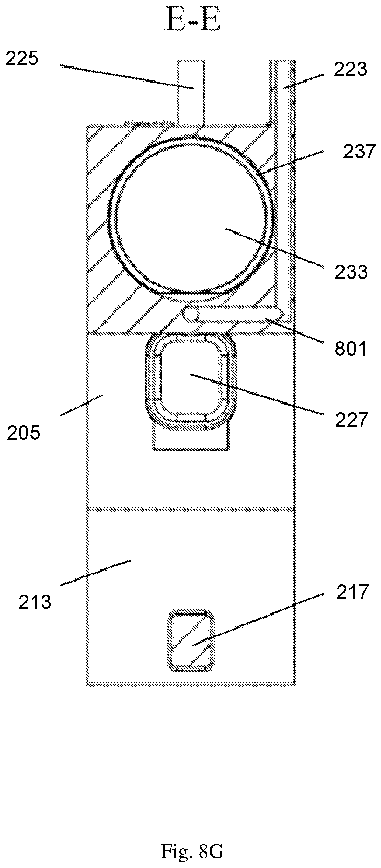

Fig. 8G shows a cross sectional image of a testing device across section E-E. Shown in Fig. 8G are the gas outlet 225, the base 205, the hinged element 213, the gas inlet 223, the lower plate 237, the test paper 233, an air inlet channel 801, the liquid capsule 227 and the protrusion 217.

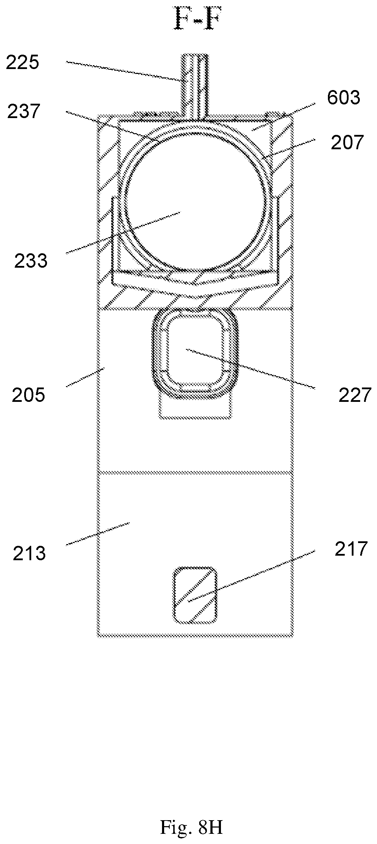

Fig. 8H shows a cross sectional image of a testing device across section F-F. Shown in Fig. 8H are the gas outlet 225, the lower plate 237, the gas inlet 223, the base 205, the hinged element 213, the liquid channel 603, the reaction chamber 207, the liquid capsule 227 and the protrusion 217.

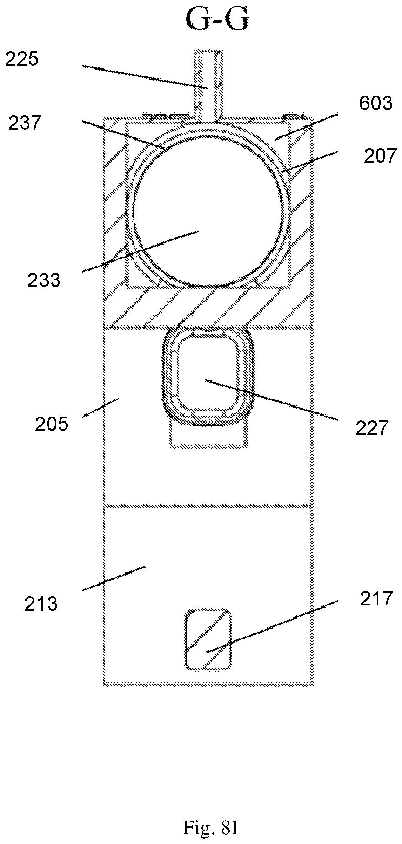

Fig. 8I shows a cross sectional image of a testing device across section G-G. Shown in Fig. 8I are the gas outlet 225, the lower plate 237, the test paper 233, the base 205, the hinged element 213, the liquid channel 603, the reaction chamber 207, the liquid capsule 227 and the protrusion 217.

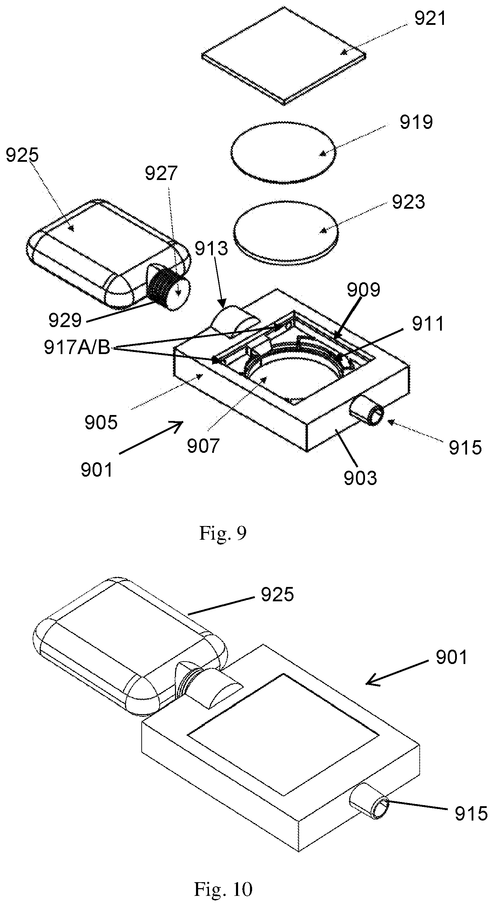

Fig. 9 shows a testing device 901 with a liquid capsule 925 and a test paper 919.

According to an embodiment, the testing device 901 has a body 203 that has a base 205. Formed in the body 903 is a reaction chamber 907. An upper surface 909 of the reaction chamber 907 is arranged to detachably connect to an upper transparent plate 921. A lower surface 911 of the reaction chamber 907 is arranged to detachably connect to a lower transparent plate 923.

The testing device in this example does not have a hinged element as described with reference to Fig. 2.

Instead, the testing device 901 has a capsule receiving aperture 913 formed on the side of the base 205. The capsule receiving aperture 913 is a circular aperture with an internal capsule thread 929. The capsule thread 929 corresponds with capsule thread 929 on the nozzle of the liquid capsule 925. In this example, a liquid releasing mechanism (not shown) for releasing liquid from the liquid capsule 925 into the reaction chamber 907 is located inside the capsule receiving aperture 913 (as explained in more detail below).

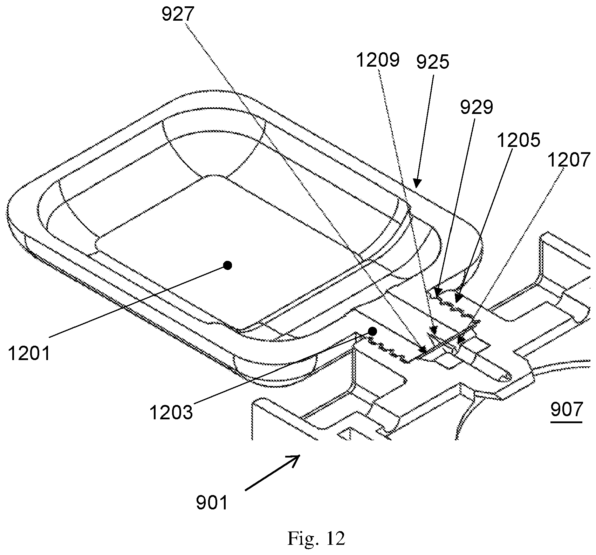

The capsule receiving aperture 913 is arranged to receive the nozzle of the liquid capsule 925 when the liquid capsule is screwed into the capsule receiving aperture 913. The capsule thread 929 engages with the aperture thread (see Figs. 12, 13A and 14) in the capsule receiving aperture 913. In between the reaction chamber 907 and the capsule receiving aperture 913 is a capsule fluid channel (see Figs. 12, 13A and 14) that allows liquid to be transferred from the liquid capsule 925 to the reaction chamber 907.

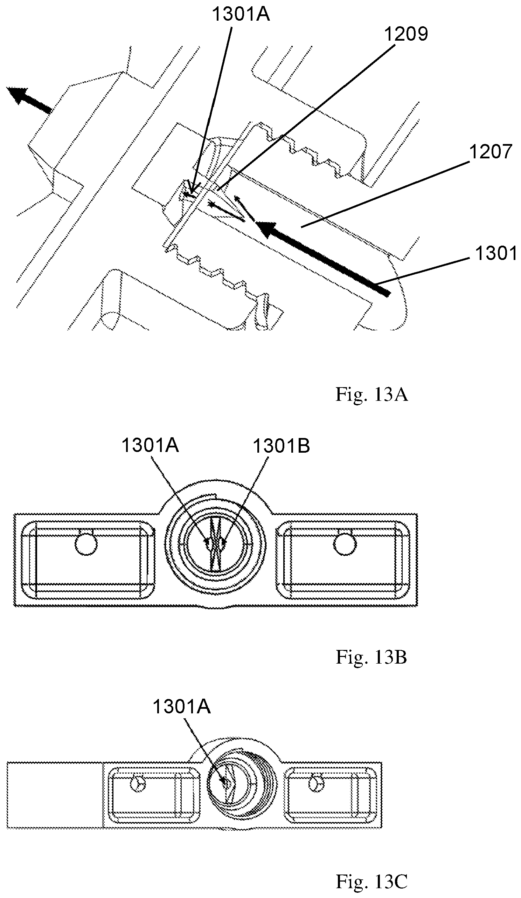

The liquid releasing mechanism in this example is shown in more detail in Figures 12 and 13A to 13C. The liquid releasing mechanism has a piercing element that is arranged to pierce the seal 927 of the liquid capsule 925 when the liquid capsule is screwed into the capsule receiving aperture 913.

Located on the side of the body 903 of the testing device 901 is a gas inlet 915. Two gas outlets (917A, 917B) are located inside the reaction chamber 907 to allow gas to flow out of the reaction chamber 907, though a gas channel outlet in the body 903 and to an outlet pipe (not shown). An inlet pipe (not shown) may be connected to the gas inlet.

In this embodiment, the test paper 919 and lower transparent plate 923 are circular or disk like in shape to correspond with the shape of the lower surface 911 and the lower opening of the reaction chamber 907. The upper transparent plate 921 is rectangular in shape to correspond with the shape of the upper surface 909 and the upper opening of the reaction chamber 907. However, it will be understood that alternative shapes may be used, such as, for example, rectangular and elliptical shapes for the lower surface and circular and elliptical shapes for the upper surface.

Also, in this embodiment, the liquid capsule 925 is a compressible liquid capsule and is arranged to store liquid therein.

Upon the liquid capsule 925 being located into the capsule receiving aperture 913, the piercing element breaks the seal 927. Upon the liquid capsule 925 being compressed or squeezed by the user, the liquid inside of the liquid capsule 925 comes out through the ruptured seal 927 and enters the reaction chamber 907 via the capsule fluid channel (see Figs. 12, 13A and 14) and two piercing element fluid channels (see Figs 13A - 13C).

In this embodiment, the liquid capsule 925 is made of Polyethylene (PE) and has a nozzle covered by a seal 927 to prevent liquid leaking from the liquid capsule until a test is initiated. In this example, the seal 927 is a flexible metal-plastic laminate. The liquid capsule 925, test paper 919 and two transparent plates or sheets (921, 923) are assembled into the reaction chamber 907 in the base 905 of the body 903 of the testing device 901.

The liquid capsule 925 in this example is made of polyethylene (PE), which has good chemical stability. It is insoluble in general solvents at room temperature, and has low water absorption, excellent electrical insulation. The material does not react with the liquid stored therein. It will be understood that alternative materials may be used for the liquid capsule, such as, for example, polypropylene (PP), polytetrafluoroethylene (PTFE), polybutylene terephthalate (PBT), polyamide (PA) and polyvinyl chloride (PVC).

It will be understood that alternative materials may be used for the seal, such as, for example, metal (e.g. flexible metal), silicon, rubber and a plastic film.

Fig. 10 shows a testing device 901 with a liquid capsule 925 inserted therein.

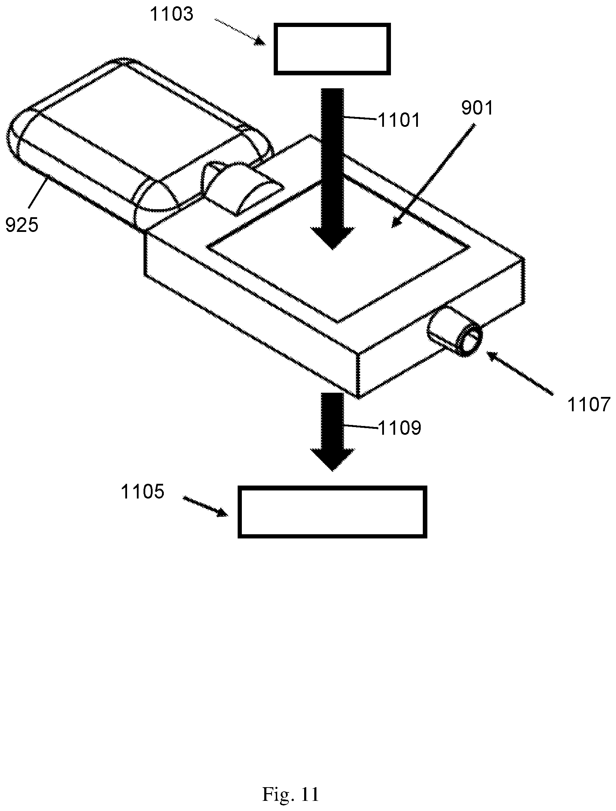

Fig. 11 shows a testing device 901 in use.

The light source 1103 emits light 1101 into the reaction chamber of the testing device 901. Light passes through the reaction chamber and light (1109) is emitted out of the other side of the reaction chamber. The light 1101 passes through the upper plate 921, test paper 919, which has been wetted by the liquid (e.g. reagent solution) from the liquid capsule, and the lower plate 923 and is emitted onto the photo sensor 1105 for detection purposes.

An external pump (not shown) pumps the gas under test (GUT) into the reaction chamber 907 through the gas inlet 1107 via a gas inlet pipe (not shown). The GUT exits the testing device 901 through the gas outlets (917A, 917B) and a gas outlet pipe (not shown).

Fig. 12 shows a cross section of a liquid capsule 925 engaging a testing device 901.

The liquid capsule 925 has an enclosure 1201 for storing the liquid. The capsule thread 929 on the nozzle 1203 engages with the aperture thread 1205 when the user rotates the liquid capsule 925 and testing device 901 relative to each other. Upon the liquid capsule 925 being located into the capsule receiving aperture 913, the piercing element 1209 pierces, breaks (or ruptures) the seal 927. Upon the liquid capsule 925 being compressed or squeezed by the user, the liquid inside of the liquid capsule 925 comes out through the ruptured seal 927 and enters the reaction chamber 907 via the capsule fluid channel 1207 and two piercing element fluid channels (see Fig. 13B).

Figs. 13A to 13C show a piercing element penetrating a seal in a liquid capsule.

Fig. 13A shows the flow (1301) of liquid along the capsule fluid channel 1207. The piercing element 1209 is on the form of a needle and has two piercing element fluid channels (1301A, 1301B) formed through the piercing element to allow fluid to flow from the liquid capsule 925 to the reaction chamber 907.

It will be understood that, as an alternative, the piercing element may have one or more piercing element fluid channels formed therein to allow fluid to flow from the liquid capsule to the reaction chamber.

Fig. 13B shows a front view of the two piercing element fluid channels (1301A, 1301B) formed through the piercing element.

Fig. 13C shows a front side view of one of the two piercing element fluid channels (1301A) formed through the piercing element.

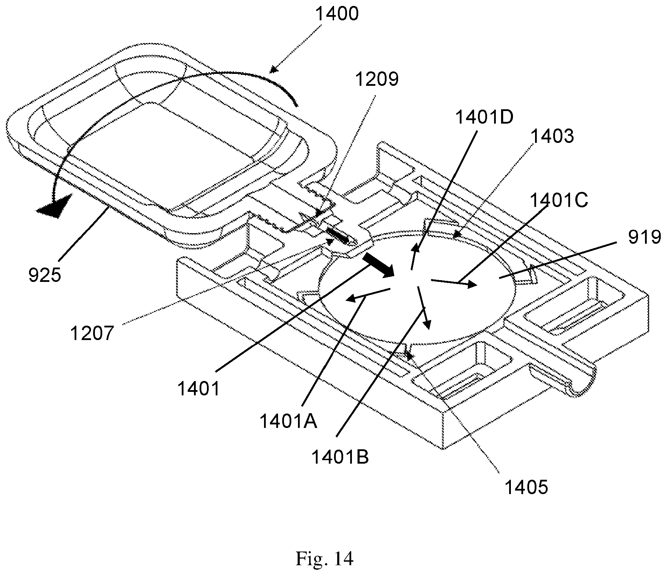

Fig. 14 shows an example of the flow of the liquid from the liquid capsule 925 in a testing device 901 that is shown in cross-section, after the liquid capsule has been inserted into the testing device by rotating the liquid capsule in the direction of the arrow 1400. The test paper 919 is shown on top of the lower transparent plate (not shown), which is resting on the lower surface (not shown) of the reaction chamber 907. The liquid in the liquid capsule 925 flows (1401) from the liquid capsule 925 via the capsule fluid channel 1207 into the reaction chamber 907 and over the surface of the test paper 919 as indicated by the flow arrows 1401A-D. Around the edge of the reaction chamber 907 is a liquid channel 1403. In this example, the liquid channel 1403 is a ring cavity that is arranged circumferentially around the edge of the reaction chamber 907, and so around the edge of the test paper 919 when the testing device 901 is in use. When in use, the liquid channel 1403 is below the upper surface of the test paper 919 to allow the excess liquid to pass over the edge of the test paper 919 and enter the liquid channel 1403.

The liquid channel 1403 is fluidly connected to liquid chambers 1405. The liquid chambers 1405 are located perpendicularly off the liquid channel 1403.

It will be understood that, as an alternative, there may be one or more liquid chambers that are fluidly connected to one or more liquid channels. It will also be understood that the configuration and positioning of the liquid channel(s) and/or liquid chamber(s) may be changed.

The liquid discharge and collection mechanism described can prevent or reduce the risk of diluting the liquid (e.g. a reagent solution) in the test paper 919 by enabling the excess liquid to enter and be stored in the liquid chambers 1405 via the liquid channel 1403.

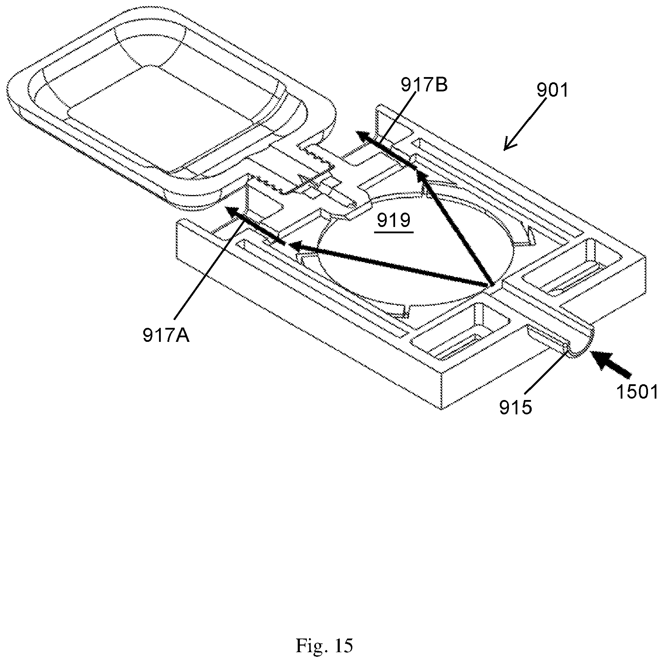

Fig. 15 shows the flow of gas 1501 in a testing device 1201 via the gas inlet 915. The gas passes over the test paper 919 and exits via the gas outlets (917A, 917B).

In summary, the testing device stores the liquid in the liquid capsule outside of the test device. It makes the storage of the liquid simple and convenient. When the liquid capsule is placed into the capsule receiving aperture and squeezed or compressed by the user, the liquid is discharged. The excess liquid is collected by the liquid storage chamber(s) so that the excess liquid does not affect the test result of the test paper.

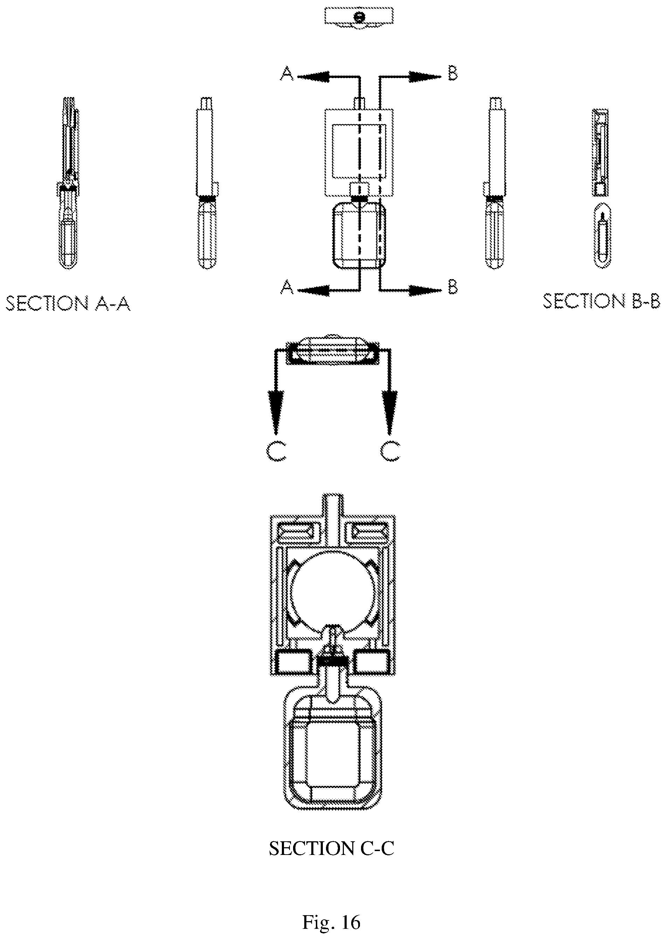

Fig. 16 shows cross-sectional images of a testing device 901 across sections A-A, B-B and C-C.

It will be understood that the liquid capsule may engage with the testing device in any other suitable manner to enable the piercing element to pierce the seal. For example, a push fit connection may be provided that allows a user to push the nozzle of the liquid capsule into the capsule receiving aperture whereupon the push-fit connection holds the liquid capsule in place and the piercing element pierces the seal.

Described is a testing device that is used for analyte measurements. The testing device has a body and a liquid releasing mechanism. The body has a reaction chamber and a capsule receiving aperture that received the liquid capsule that contains the liquid. The reaction chamber and capsule receiving aperture are in fluid communication with each other. The body also has at least one gas inlet and at least one gas outlet, wherein the gas inlet is arranged to receive a gas under test (GUT). The reaction chamber is arranged to receive, during a test of the gas under test, a first transparent plate and a second transparent plate with a test paper positioned between the first transparent plate and the second transparent plate. The liquid releasing mechanism is arranged to release the liquid in the liquid capsule into the reaction chamber during the test. The body also has at least one liquid store in communication with the reaction chamber. The liquid store is arranged to receive excess liquid from the liquid in the liquid capsule during the test.

According to one example, the liquid releasing mechanism has a hinged element that is hingedly connected to the body, and a protrusion that is positioned on the hinged element. The protrusion is arranged to enter the capsule receiving aperture when the hinged element is hingedly moved relative to the body to engage with the liquid capsule and squeeze out the liquid into the reaction chamber.

According to one example, the capsule receiving aperture has a capsule chamber located in the body. The capsule chamber is in fluid communication with the reaction chamber via a capsule fluid channel.

According to one example, the reaction chamber is arranged to detachably connect to a first transparent plate at an upper surface of the reaction chamber and detachably connect to a second transparent plate at a lower surface of the reaction chamber. During a test of the gas under test, the second transparent plate may be arranged to receive a test paper positioned upon the second transparent plate and between the first transparent plate and the second transparent plate.

According to one example, the liquid releasing mechanism comprises a piercing element that is arranged to release the liquid in the liquid capsule when the liquid capsule is provided to the capsule receiving aperture.

According to one example, the piercing element comprises at least one hollow channel through the piercing element to provide fluid communication between the liquid capsule

According to one example, the capsule receiving aperture is an aperture in the side of the body that is in fluid communication with the reaction chamber, the capsule receiving aperture comprising an aperture thread that corresponds with a capsule thread on the liquid capsule.

According to one example, the liquid store comprises at least one liquid channel and at least one liquid chamber, wherein the liquid channel is in fluid communication with the reaction chamber, and the liquid channel is arranged to receive excess liquid from the liquid in the liquid capsule during the test;

According to one example, the liquid chamber is in fluid communication with the liquid channel to receive and store the excess liquid. The liquid channel may be arranged around a circumference of the reaction chamber and positioned below the surface of the test paper when in use. The liquid channel may have one of an annular, rectangular, circular or elliptical shape.

Also described is a liquid capsule for use with the testing device described herein. The liquid capsule has a body forming an enclosure for containing a liquid. The liquid capsule has a nozzle with an opening that is in fluid communication with the enclosure. The liquid capsule has a seal that is placed across the opening to retain the liquid inside the enclosure. The seal is arranged to release the liquid upon either i) the body being deformed and/or ii) the seal being penetrated by a piercing element of the testing device. The liquid may be water, a buffer solution, or a reagent solution.

Also described is a test kit that has a testing device described herein and also has at least one of a test paper, at least two transparent sheets, and a liquid capsule. The at least two transparent sheets may be polymethyl methacrylate (PMMA) sheets. The liquid capsule may be made from polyethylene (PE), polypropylene (PP), polytetrafluoroethylene (PTFE), polybutylene terephthalate (PBT), polyamide (PA) and polyvinyl chloride (PVC. The seal may be one of a flexible metal layer, a metal layer, a plastic laminate layer, a rubber seal and a plastic film. The seal may be a silicone valve acting as a one-way valve.

### Industrial Applicability

The arrangements described are applicable to the analyte measurement industry.

The foregoing describes only some embodiments of the present invention, and modifications and/or changes can be made thereto without departing from the scope of the invention, the embodiments being illustrative and not restrictive.

It it should be noted that the various components of the present invention are not limited to the above-mentioned overall application. The technical features described can be selected individually or used in combination according to actual needs. Therefore, other combinations and specific applications related to the invention of this case are covered. The scope of the invention is solely limited by the appended claims.

In the context of this specification, the word "comprising" means "including principally but not necessarily solely" or "having" or "including", and not "consisting only of". Variations of the word "comprising", such as "comprise" and "comprises" have correspondingly varied meanings.

## Claims

1. A testing device (101) for analyte measurements, the testing device (101) comprising a body (203) and a liquid releasing mechanism,
the body (203) comprising a reaction chamber (207) and a capsule receiving aperture (219) for receiving a liquid capsule (227) containing a liquid, wherein the reaction chamber (207) and the capsule receiving aperture are in fluid communication with each other;
the body further comprising at least one gas inlet (107) and at least one gas outlet (109), wherein the gas inlet (107) is arranged to receive a gas under test, wherein the at least one gas inlet (107) and the at least one gas outlet (109) are connected to the reaction chamber (207) to allow gas to flow in and out of the reaction chamber (207);
wherein the reaction chamber (207) is arranged to receive, during a test of the gas under test, a first transparent plate (235) and a second transparent plate (237) with a test paper (233) positioned between the first transparent plate (235) and the second transparent plate (237);
wherein the liquid releasing mechanism is arranged to release the liquid in the liquid capsule (227) into the reaction chamber (207) during the test;
**characterised in that** the body (203) further comprises:
at least one liquid store in communication with the reaction chamber (207), wherein the liquid store is arranged to receive excess liquid from the liquid in the liquid capsule (227) during the test, and wherein the liquid releasing mechanism comprises a hinged element (213) that is hingedly connected to the body (203), and a protrusion (217) positioned on the hinged element (213) that is arranged to enter the capsule receiving aperture (219) when the hinged element (213) is hingedly moved relative to the body (203) to engage with the liquid capsule (227) and squeeze out the liquid into the reaction chamber (207).

2. The testing device of claim 1, wherein the reaction chamber (207) is arranged to detachably connect to a first transparent plate (235) at an upper surface (209) of the reaction chamber (207) and detachably connect to a second transparent plate (237) at a lower surface (211) of the reaction chamber (207), wherein during a test of the gas under test, the second transparent plate (237) is arranged to receive a test paper (233) positioned upon the second transparent plate (237) and between the first transparent plate (235) and the second transparent plate (237).

3. The testing device of claim 1, wherein the capsule receiving aperture (219) comprises a capsule chamber located in the body (203), wherein the capsule chamber is in fluid communication with the reaction chamber (207) via a capsule fluid channel.

4. The testing device of claim 1, wherein the liquid releasing mechanism comprises a piercing element (1209) that is arranged to release the liquid in the liquid capsule (925) when the liquid capsule (925) is provided to the capsule receiving aperture (913).

5. The testing device of claim 4, wherein the piercing element (1209) comprises at least one hollow channel (1301A, 1301B) through the piercing element (1209) to provide fluid communication between the liquid capsule (925) and the reaction chamber (907).

6. The testing device of claim 1, wherein the capsule receiving aperture (913) is an aperture in the side of the body (905) that is in fluid communication with the reaction chamber (907), the capsule receiving aperture (913) comprising an aperture thread (1205) that corresponds with a capsule thread (929) on the liquid capsule (925).

7. The testing device of claim 1, wherein the liquid store comprises at least one liquid channel (1403) and at least one liquid chamber (1405), wherein the liquid channel (1403) is in fluid communication with the reaction chamber (907), and the liquid channel (1403) is arranged to receive excess liquid from the liquid in the liquid capsule (925) during the test; and the liquid chamber (1405) is in fluid communication with the liquid channel (1403) to receive and store the excess liquid.

8. The testing device of claim 7, wherein the liquid channel (1403) is arranged around a circumference of the reaction chamber (907) and positioned below the surface of the test paper (919) when in use.

9. The testing device of claim 7, wherein the liquid channel (1403) has one of an annular, rectangular, circular or elliptical shape.

10. A test kit comprising a testing device (101) of any one of claims 1 to 9, and further comprising at least one test paper (233) and at least two transparent sheets (235, 237).

11. A test kit comprising a testing device (101) of any one of claims 1 to 9, and further comprising a liquid capsule (227) comprising a body forming an enclosure for containing a liquid, a nozzle with an opening that is in fluid communication with the enclosure, and a seal placed across the opening to retain the liquid inside the enclosure, wherein the seal is arranged to release the liquid upon either i) the body being deformed and/or ii) the seal being penetrated by a piercing element of the testing device.

12. The test kit of claim 10, wherein the at least two transparent sheets (235, 237) are polymethyl methacrylate sheets.

13. The test kit of claim 11, wherein the seal in the liquid capsule (227) is one of a flexible metal layer, a metal layer, a plastic laminate layer, a rubber seal, a plastic film and a one way silicone valve.

14. The test kit of claim 11, wherein the liquid capsule (227) is a made from polyethylene, polypropylene (PP), polytetrafluoroethylene (PTFE), polybutylene terephthalate (PBT), polyamide (PA) or polyvinyl chloride (PVC).

## Patentansprüche

1. Testvorrichtung (101) für Analytmessungen, die Testvorrichtung (101) umfassend einen Körper (203) und einen Flüssigkeitsfreigabemechanismus,
der Körper (203) umfassend eine Reaktionskammer (207) und eine Kapselaufnahmeöffnung (219) zum Aufnehmen einer Flüssigkeitskapsel (227), die eine Flüssigkeit enthält, wobei die Reaktionskammer (207) und die Kapselaufnahmeöffnung miteinander in Fluidverbindung stehen;
der Körper ferner umfassend mindestens einen Gaseinlass (107) und mindestens einen Gasauslass (109), wobei der Gaseinlass (107) angeordnet ist, um ein zu testendes Gas aufzunehmen, wobei der mindestens eine Gaseinlass (107) und der mindestens eine Gasauslass (109) mit der Reaktionskammer (207) verbunden sind, um Gas in die und aus der Reaktionskammer (207) strömen zu lassen;
wobei die Reaktionskammer (207) angeordnet ist, um während eines Tests des zu testenden Gases eine erste transparente Platte (235) und eine zweite transparente Platte (237) mit einem Testpapier (233) aufzunehmen, das zwischen der ersten transparenten Platte (235) und der zweiten transparenten Platte (237) positioniert ist;
wobei der Flüssigkeitsfreigabemechanismus angeordnet ist, um die Flüssigkeit in der Flüssigkeitskapsel (227) während des Tests in die Reaktionskammer (207) freizugeben;
**dadurch gekennzeichnet, dass** der Körper (203) ferner umfasst:
mindestens einen Flüssigkeitsspeicher in Verbindung mit der Reaktionskammer (207), wobei der Flüssigkeitsspeicher angeordnet ist, um während des Tests überschüssige Flüssigkeit von der Flüssigkeit in der Flüssigkeitskapsel (227) aufzunehmen, und wobei der Flüssigkeitsfreigabemechanismus ein klappbares Element (213) umfasst, das mit dem Körper (203) klappbar verbunden ist, und einen Vorsprung (217), der an dem klappbaren Element (213) positioniert ist, der angeordnet ist, um in die Kapselaufnahmeöffnung (219) einzutreten, wenn das klappbare Element (213) relativ zu dem Körper (203) klappbar bewegt wird, um mit der Flüssigkeitskapsel (227) in Eingriff zu stehen und die Flüssigkeit in die Reaktionskammer (207) herauszudrücken.

2. Testvorrichtung nach Anspruch 1, wobei die Reaktionskammer (207) angeordnet ist, um sich an einer oberen Oberfläche (209) der Reaktionskammer (207) mit einer ersten transparenten Platte (235) lösbar zu verbinden und sich an einer unteren Oberfläche (211) der Reaktionskammer (207) mit einer zweiten transparenten Platte (237) lösbar zu verbinden, wobei während eines Tests des zu testenden Gases die zweite transparente Platte (237) angeordnet ist, um ein Testpapier (233) aufzunehmen, das auf der zweiten transparenten Platte (237) und zwischen der ersten transparenten Platte (235) und der zweiten transparenten Platte (237) positioniert ist.

3. Testvorrichtung nach Anspruch 1, wobei die Kapselaufnahmeöffnung (219) eine Kapselkammer umfasst, die in dem Körper (203) angeordnet ist, wobei die Kapselkammer über einen Kapselfluidkanal in Fluidverbindung mit der Reaktionskammer (207) steht.

4. Testvorrichtung nach Anspruch 1, wobei der Flüssigkeitsfreigabemechanismus ein Durchstechelement (1209) umfasst, das angeordnet ist, um die Flüssigkeit in der Flüssigkeitskapsel (925) freizugeben, wenn die Flüssigkeitskapsel (925) an der Kapselaufnahmeöffnung (913) bereitgestellt ist.

5. Testvorrichtung nach Anspruch 4, wobei das Durchstechelement (1209) mindestens einen Hohlkanal (1301A, 1301B) durch das Durchstechelement (1209) umfasst, um eine Fluidverbindung zwischen der Flüssigkeitskapsel (925) und der Reaktionskammer (907) bereitzustellen.

6. Testvorrichtung nach Anspruch 1, wobei die Kapselaufnahmeöffnung (913) eine Öffnung in der Seite des Körpers (905) ist, die in Fluidverbindung mit der Reaktionskammer (907) steht, die Kapselaufnahmeöffnung (913) umfassend ein Öffnungsgewinde (1205), das einem Kapselgewinde (929) an der Flüssigkeitskapsel (925) entspricht.

7. Testvorrichtung nach Anspruch 1, wobei der Flüssigkeitsspeicher mindestens einen Flüssigkeitskanal (1403) und mindestens eine Flüssigkeitskammer (1405) umfasst, wobei der Flüssigkeitskanal (1403) in Fluidverbindung mit der Reaktionskammer (907) steht und der Flüssigkeitskanal (1403) angeordnet ist, um während des Tests überschüssige Flüssigkeit von der Flüssigkeit in der Flüssigkeitskapsel (925) aufzunehmen; und die Flüssigkeitskammer (1405) mit dem Flüssigkeitskanal (1403) in Fluidverbindung steht, um die überschüssige Flüssigkeit aufzunehmen und zu speichern.

8. Testvorrichtung nach Anspruch 7, wobei der Flüssigkeitskanal (1403) um einen Umfang der Reaktionskammer (907) herum angeordnet und bei Verwendung unterhalb der Oberfläche des Testpapiers (919) positioniert ist.

9. Testvorrichtung nach Anspruch 7, wobei der Flüssigkeitskanal (1403) eines von einer Ring-, Rechtecks-, Kreis- oder Ellipsenform aufweist.

10. Testkit, umfassend eine Testvorrichtung (101) nach einem der Ansprüche 1 bis 9, und ferner umfassend mindestens ein Testpapier (233) und mindestens zwei transparente Folien (235, 237).

11. Testkit, umfassend eine Testvorrichtung (101) nach einem der Ansprüche 1 bis 9, und ferner umfassend eine Flüssigkeitskapsel (227), umfassend einen Körper, der eine Umschließung zum Enthalten einer Flüssigkeit ausbildet, eine Düse mit einer Aussparung, die in Fluidverbindung mit der Umschließung steht, und eine Dichtung, die über der Aussparung hinweg platziert ist, um die Flüssigkeit im Inneren der Umschließung zurückzuhalten, wobei die Dichtung angeordnet ist, um die Flüssigkeit freizugeben, wenn entweder i) der Körper verformt wird und/oder ii) die Dichtung durch ein Durchstechelement der Testvorrichtung durchdrungen wird.

12. Testkit nach Anspruch 10, wobei die mindestens zwei transparenten Folien (235, 237) Polymethylmethacrylatfolien sind.

13. Testkit nach Anspruch 11, wobei die Dichtung in der Flüssigkeitskapsel (227) eine von einer flexiblen Metallschicht, einer Metallschicht, einer Kunststofflaminatschicht, einer Gummidichtung, einem Kunststofffilm und einem Einweg-Silikonventil ist.

14. Testkit nach Anspruch 11, wobei die Flüssigkeitskapsel (227) aus Polyethylen, Polypropylen (PP), Polytetrafluorethylen (PTFE), Polybutylenterephthalat (PBT), Polyamid (PA) oder Polyvinylchlorid (PVC) hergestellt ist.

## Revendications

1. Dispositif de test (101) destiné à des mesures d'analyte, le dispositif de test (101) comprenant un corps (203) et un mécanisme de libération de liquide,
le corps (203) comprenant une chambre de réaction (207) et un orifice de réception de capsule (219) permettant de recevoir une capsule de liquide (227) contenant un liquide, dans lequel la chambre de réaction (207) et l'orifice de réception de capsule sont en communication fluidique l'un avec l'autre ;
le corps comprenant en outre au moins une entrée de gaz (107) et au moins une sortie de gaz (109), dans lequel l'entrée de gaz (107) est agencée pour recevoir un gaz soumis à un test, dans lequel l'au moins une entrée de gaz (107) et l'au moins une sortie de gaz (109) sont raccordées à la chambre de réaction (207) pour permettre à du gaz de s'écouler vers l'intérieur et l'extérieur de la chambre de réaction (207) ;
dans lequel la chambre de réaction (207) est agencée pour recevoir, pendant un test du gaz soumis à un test, une première plaque transparente (235) et une seconde plaque transparente (237) avec un papier test (233) positionné entre la première plaque transparente (235) et la seconde plaque transparente (237) ;
dans lequel le mécanisme de libération de liquide est agencé pour libérer le liquide présent dans la capsule de liquide (227) dans la chambre de réaction (207) pendant le test ;
**caractérisé en ce que** le corps (203) comprend en outre :
au moins un réservoir à liquide en communication avec la chambre de réaction (207), dans lequel le réservoir à liquide est agencé pour recevoir du liquide en excès provenant du liquide dans la capsule de liquide (227) pendant le test, et dans lequel le mécanisme de libération de liquide comprend un élément articulé (213) qui est relié de manière articulée au corps (203), et une partie saillante (217) positionnée sur l'élément articulé (213) qui est agencée pour entrer dans l'orifice de réception de capsule (219) lorsque l'élément articulé (213) est déplacé de manière articulée par rapport au corps (203) pour venir en prise avec la capsule de liquide (227) et extraire le liquide vers la chambre de réaction (207).

2. Dispositif de test selon la revendication 1, dans lequel la chambre de réaction (207) est agencée pour se raccorder de manière détachable à une première plaque transparente (235) au niveau d'une surface supérieure (209) de la chambre de réaction (207) et se raccorder de manière détachable à une seconde plaque transparente (237) au niveau d'une surface inférieure (211) de la chambre de réaction (207), dans lequel pendant un test du gaz soumis à un test, la seconde plaque transparente (237) est agencée pour recevoir un papier test (233) positionné sur la seconde plaque transparente (237) et entre la première plaque transparente (235) et la seconde plaque transparente (237).

3. Dispositif de test selon la revendication 1, dans lequel l'orifice de réception de capsule (219) comprend une chambre de capsule localisée dans le corps (203), dans lequel la chambre de capsule est en communication fluidique avec la chambre de réaction (207) par l'intermédiaire d'un canal de fluide de capsule.

4. Dispositif de test selon la revendication 1, dans lequel le mécanisme de libération de liquide comprend un élément de perçage (1209) qui est agencé pour libérer le liquide présent dans la capsule de liquide (925) lorsque la capsule de liquide (925) est fournie à l'orifice de réception de capsule (913).

5. Dispositif de test selon la revendication 4, dans lequel l'élément de perçage (1209) comprend au moins un canal creux (1301A, 1301B) à travers l'élément de perçage (1209) pour fournir une communication fluidique entre la capsule de liquide (925) et la chambre de réaction (907).

6. Dispositif de test selon la revendication 1, dans lequel l'orifice de réception de capsule (913) est un orifice dans le côté du corps (905) qui est en communication fluidique avec la chambre de réaction (907), l'orifice de réception de capsule (913) comprenant un taraudage d'orifice (1205) qui correspond à un filetage de capsule (929) sur la capsule de liquide (925).

7. Dispositif de test selon la revendication 1, dans lequel le réservoir à liquide comprend au moins un canal de liquide (1403) et au moins une chambre à liquide (1405), dans lequel le canal de liquide (1403) est en communication fluidique avec la chambre de réaction (907), et le canal de liquide (1403) est agencé pour recevoir du liquide en excès provenant du liquide dans la capsule de liquide (925) pendant le test ; et la chambre à liquide (1405) est en communication fluidique avec le canal de liquide (1403) pour recevoir et stocker le liquide en excès.

8. Dispositif de test selon la revendication 7, dans lequel le canal de liquide (1403) est agencé autour d'une circonférence de la chambre de réaction (907) et positionné en dessous de la surface du papier test (919) en cours d'utilisation.

9. Dispositif de test selon la revendication 7, dans lequel le canal de liquide (1403) a l'une parmi une forme annulaire, rectangulaire, circulaire ou elliptique.

10. Trousse de test comprenant un dispositif de test (101) selon l'une quelconque des revendications 1 à 9, et comprenant en outre au moins un papier test (233) et au moins deux feuilles transparentes (235, 237).

11. Trousse de test comprenant un dispositif de test (101) selon l'une quelconque des revendications 1 à 9, et comprenant en outre une capsule de liquide (227) comprenant un corps formant une enceinte destinée à contenir un liquide, une buse avec une ouverture qui est en communication fluidique avec l'enceinte, et un joint d'étanchéité placé à travers l'ouverture pour retenir le liquide à l'intérieur de l'enceinte, dans laquelle le joint d'étanchéité est agencé pour libérer le liquide lorsque soit i) lorsque le corps est déformé et/ou ii) lorsque le joint d'étanchéité est pénétré par un élément de perçage du dispositif de test.

12. Trousse de test selon la revendication 10, dans laquelle les au moins deux feuilles transparentes (235, 237) sont des feuilles en polyméthacrylate de méthyle.

13. Trousse de test selon la revendication 11, dans laquelle le joint d'étanchéité dans la capsule de liquide (227) est l'un parmi une couche en métal flexible, une couche en métal, une couche stratifiée en plastique, un joint d'étanchéité en caoutchouc, un film en plastique et une valve antiretour en silicone.

14. Trousse de test selon la revendication 11, dans laquelle la capsule de liquide (227) est une capsule fabriquée en polyéthylène, en polypropylène (PP), en polytétrafluoroéthylène (PTFE), en téréphtalate de polybutylène (PBT), en polyamide (PA) ou en poly(chlorure de vinyle) (PVC).
